# EUROPEAN PATENT APPLICATION

(11) **EP 0 695 769 A1**
(43) Date of publication of application: **07.02.1996**
(21) Application number: 95110098.1
(22) Date of filing: 28.06.1995
(51) Int. Cl.: C08F 291/00

(54) **Methods of preparing hollow polymeric particles**

(30) Priority: 06.07.1994 JP 155052/94
(71) Applicant: National Starch and Chemical Investment Holding Corporation, Wilmington, Delaware 19809 (US)
(72) Inventor: Okubo, Masayishi, Kobe-shi, Hyogo 657 (JP); Yoshimura, Takuji, Takarazuka-shi, Hyogo 665 (JP)
(74) Representative: Hagemann, Heinrich, Dr. rer. nat., Dipl.-Chem.

(57) **Abstract**

The present invention relates to a method of preparing a hollow polymeric particle wherein a water-insoluble monomer, water-insoluble organic solvent, seed polymeric particle, oil-soluble initiator and dispersion stabilizer are dispersed in a hydrophilic organic solvent to form a dispersion system, in which the solubilities of said water-insoluble monomer, water-insoluble organic solvent and oil-soluble initiator were reduced to effect forcible absorption of these solutes into said seed polymeric particle, in which said water-insoluble monomer is polymerized selectively.

## Description

### [Technical Field]

The present invention relates to a method of preparing a hollow polymeric particle used as a polymer pigment in a coating such as a paint, ink and cosmetic product, more particularly, to a hollow particle which is light in weight and capable of imparting hiding power and gloss to such coating.

### [Prior art]

It is known that particles of inorganic substances such as calcium carbonate and clay are incorporated to coating materials such as paints for the purpose of imparting hiding power. However, because of heavy weights of such inorganic particles, hollow polymeric particles are becoming to be employed recently instead of the inorganic particles. Such hollow polymeric particles have light weights due to their nature of hollow structure and also have an excellent hiding power-imparting effect due to diffused reflection in the hollow. In addition, the hollow polymeric particles have an advantage that they have an excellent gloss-imparting effect when compared with conventional inorganic particles.

Such hollow polymeric particles, which are produced mainly by two method described below, involve various problems in each method.

In the first method, a core/shell particle having an alkaline-swelling core is produced. Such method is disclosed in, for example, JPA 56-32513, 60-69103 and 61-185505. Thus, in preparation of particles having the core/shell structure, the core is formed as a polymer capable of being swollen by an alkaline reagent, while the shell is formed to have an alkali permeability. Subsequently, the core/shell-structured particle is worked up with an alkaline solution to allow the core to be swollen, and then dried at a temperature of the glass transition temperature (Tg) of the shell or lower. A particle obtained by this method has a small particle size and is a porous particle which is different from the hollow polymeric particle in a form of a capsule. Accordingly, it has a small porosity and less hiding power-imparting effect and less gloss-imparting effect. It exhibits a broad particle size distribution and thus this method can not provide the particles having uniform particle size. Furthermore, this method requires the work up step using the alkaline solution, which makes the method very complicated. The hollow polymeric particle obtained by this method involves an additional disadvantage in that it has only a poor alkaline-resistance.

In the second method, difference in hydrophilicity between 2 polymers is utilized to obtain a particle. Such method is disclosed in, for example, JPA 60-223873, 61-62510 and 62-79202. Thus, a radical polymerizable monomer is post-added to a seed particle produced by a standard emulsion polymerization method whereby allowing the seed particle to be swollen, and then the emulsion polymerization is further proceeded. In the emulsion polymerization step, the difference in hydrophilicity, if any, between the seed particle and the radical polymerizable monomer causes a reversion effect, whereby forming numerous small pores in the polymeric particle obtained. This results in a microporous polymeric particle. However, the hollow polymeric particle obtained by this method also has a small particle size and less hiding power-imparting effect because of a small porosity due to its nature of only a porous hollow which is different from the hollow in a form of a capsule. Furthermore, the particle thus obtained exhibits a broad particle size distribution and thus this method can not provide the particles having uniform particle size. Accordingly, the particle size without uniformity is another reason for the poor hiding power-imparting effect and gloss-imparting effect on the coating materials.

As mentioned above, the conventional methods of preparing a hollow polymeric particle provide the hollow polymeric particle having small porosity due to the fact that the hollow is in a form of a plural of micropores and is not in a form of a capsule cavity. In addition, the particle obtained by the conventional methods has the particle size which is not uniform, resulting in a broad particle size distribution. Therefore, the hiding power-imparting effect and gloss-imparting effect of the hollow polymeric particle are not satisfactory. In addition, the conventional methods involve time-consuming and complicated processes, resulting in poor manufacturing efficiency.

### [Objectives of the invention]

The objective of the present invention is to provide a simple method of preparing a hollow polymeric particle having a single hollow in a form of a capsule cavity with a large porosity and having a uniform particle size.

### [Detailed description of the invention]

Accordingly, the method according to the present invention to prepare a polymeric particle employs as starting materials the components:
(a) a water-insoluble monomer containing a monomer having two or more polymerizable functionalities;
(b) a seed polymeric particle which is dissolved in or absorb said water-insoluble monomers (a) to be swollen;
(c) a water-insoluble organic solvent in which a polymer formed from said water-insoluble monomer (a) and said seed polymer particles (b) are dissolved or swollen;
(d) a dispersion stabilizer;
(e) an oil-soluble initiator;and,
(f) a hydrophilic organic solvent in which said water-insoluble monomer (a) is soluble but a polymer formed from said monomer or said seed polymeric particle is not, and comprises: a step wherein said components (a) to (e) are dispersed in said hydrophilic organic solvent to form a dispersion system; a step wherein the solubilities of said water-insoluble monomer (a), water-insoluble organic solvent (c) and oil-soluble initiator (e) among the components (a) to (e) forming said dispersion system are reduced whereby allowing said seed polymeric particle (b) to absorb said water-insoluble monomer (a), water-insoluble organic solvent (c) and oil-soluble initiator (e); and, a step wherein said water-insoluble monomer (a) is polymerized selectively in said seed polymeric particle (b).

As described above, in the method according to the present invention, by reducing the solubility of the monomer (a) in the dispersion system, the monomer (a) and the oil-soluble initiator (e) are forced to be absorbed into the seed polymeric particle, which then serves as a nucleus for the polymerization of the monomer (a), whereby growing the particle to a greater size. Since the seed polymeric particle (b) is employed, the polymerization reaction, which is a particle size growth reaction, is effected uniformly, resulting in a uniform particle size of the hollow polymeric particle obtained. In addition, since the monomer (a) is forced to be absorbed into the seed polymeric particle (b), almost no monomer (a) becomes to be present in dispersion medium (continuous phase). As a result, the polymerization is effected exclusively in the seed polymeric particle (b) and the production of fine particles of the polymer in the dispersion medium which may cause the broad particle size distribution is inhibited. The use of the water-insoluble organic solvent (c) together with the monomer (a) allows the water-insoluble organic solvent (c) to be absorbed forcibly together with the monomer (a) into the seed polymeric particle (b). The water-insoluble organic solvent (c) serves to form a single and large spherical hollow in the polymeric particle produced, whereby providing a hollow polymeric particle in a form of a capsule. The solubility of the monomer (a) may be reduced readily by any of convenient procedures such as addition of water to the dispersion system and/or reduction of the temperature of the dispersion system or other simple procedures.

The present invention is detailed as follows.

The hollow polymeric particle according to the present invention is prepared using the following materials (a) to (f) optionally with a water-soluble inhibitor.
(a) a water-insoluble monomer containing a monomer having two or more polymerizable functionalities;
(b) a seed polymeric particle which is dissolved in or absorb said monomers (a) to be swollen;
(c) a water-insoluble organic solvent in which a polymer formed from said monomer (a) and said seed polymer particles (b) are dissolved or swollen;
(d) a dispersion stabilizer;
(e) an oil-soluble initiator;and,
(f) a hydrophilic organic solvent in which said monomer (a) is soluble but a polymer formed from said monomer or said seed polymeric particle is not.

The water-insoluble monomer (a) described above is a mixture of a multifunctional monomer which is a radical polymerizable ethylenically unsaturated monomer and has two or more polymerizable reactive groups and a monofunctional monomer having one polymerizable reactive group.

The multifunctional monomer having two or more polymerizable reactive groups includes, for example, divinyl benzene, diallylphthalate, triallylcyanurate, ethyleneglycol dimethacrylate, tetraethyleneglycol dimethacrylate and the like.

The monofunctional monomer includes, for example, mono-vinyl aromatic monomers, acrylic monomers, vinylester monomers, vinylether monomers, monoolefinic monomers, halogenated olefinic monomers, polyvinylic monomers and the like. These monomers may be employed independently or in combination. More specifically, monomers mentioned below may be employed.

An example of the monovinyl aromatic monomers is the monovinyl aromatic hydrocarbon represented by Formula (1) shown below.

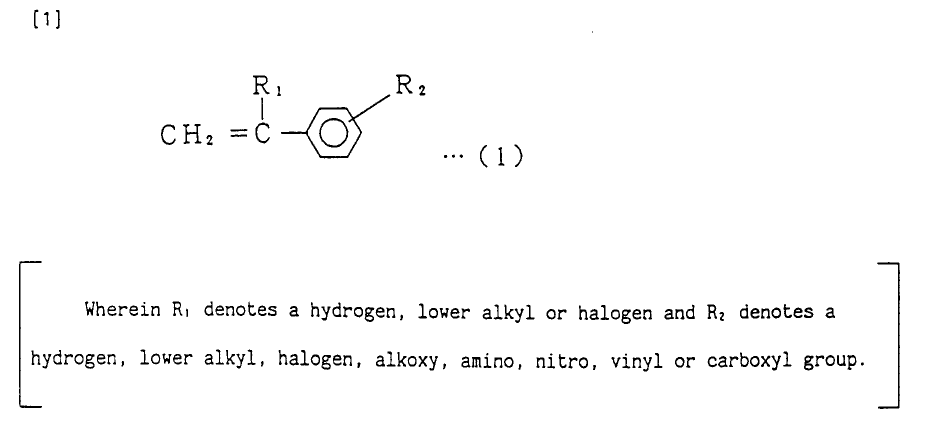

Such monovinyl aromatic hydrocarbon includes styrene, α-methylstyrene, vinyltoluene, α-chlorostyrene, o-chlorostyrene, m-chlorostyrene, p-chlorostyrene and sodium styrene sulfonate, which may be employed independently or in combination.

An example of the acrylic monomer mentioned above is represented by the general formula (2) shown below.

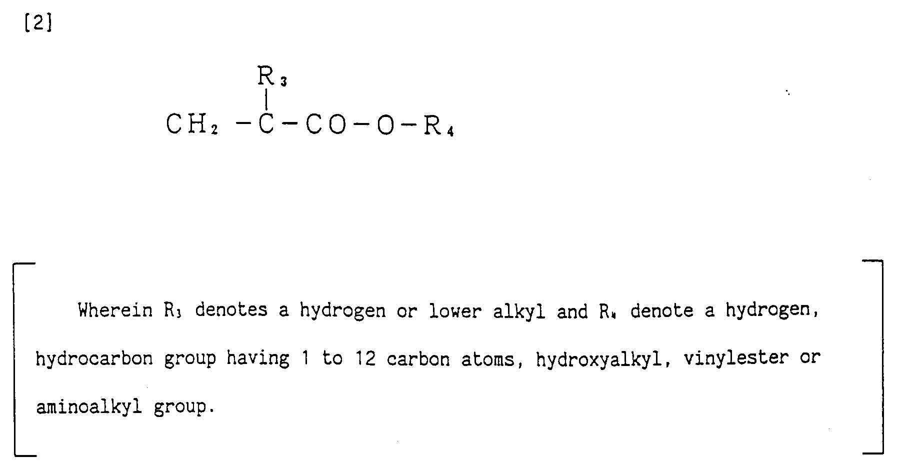

Such acrylic monomer includes acrylic acid, methacrylic acid, methyl acrylate, ethyl acrylate, butyl acrylate, 2-ethyl-hexyl acrylate, cyclohexyl acrylate, phenyl acrylate, methyl methacrylate, hexyl methacrylate, 2-ethylhexyl methacrylate, ethyl β-hydroxyacrylate, butyl γ-hydroxylacrylate, butyl δ-hydroxyacrylate, ethyl β-hydroxymethacrylate, propyl γ-aminoacrylate and propyl γ-N,N-diethylaminoacrylate

An example of the vinylester monomer mentioned above is represented by the general formula (3) shown below.

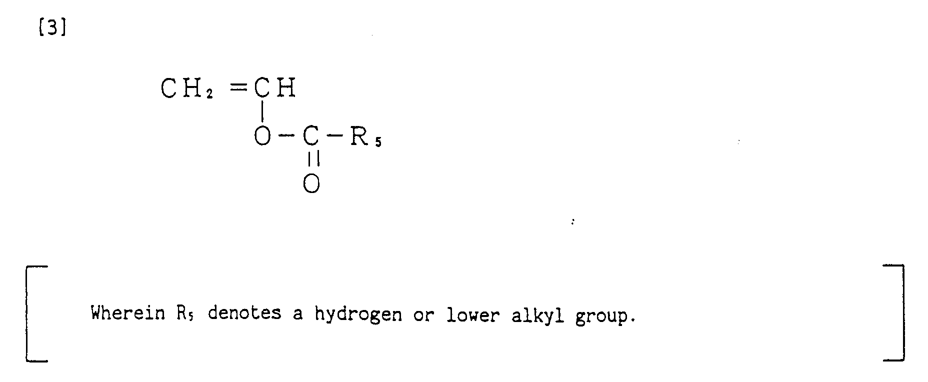

Such vinylester monomer mentioned above includes vinyl formate, vinyl acetate and vinyl propionate.

An example of the vinylether monomer is represented by the general formula (4) shown below.

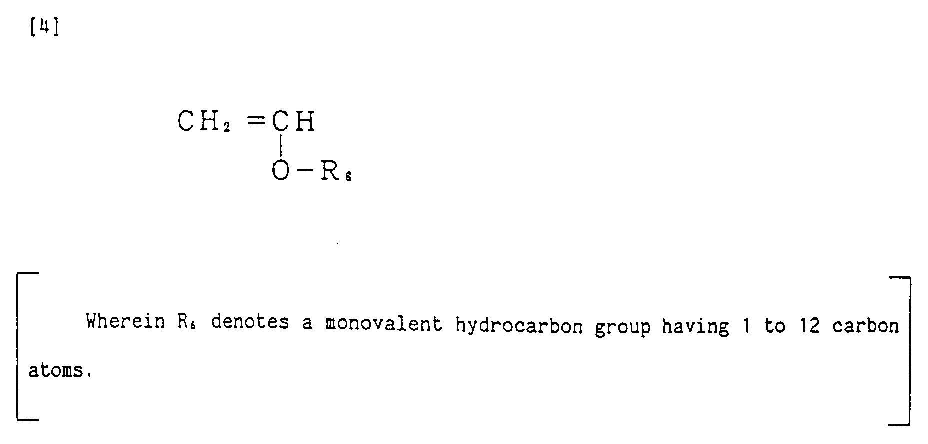

Such vinylether monomer includes vinyl methylether, vinyl ethylether, vinyl n-butylether, vinyl phenylether and vinyl cyclohexylether.

An example of the monoolefinic monomer mentioned above is represented by the general formula (5) shown below.

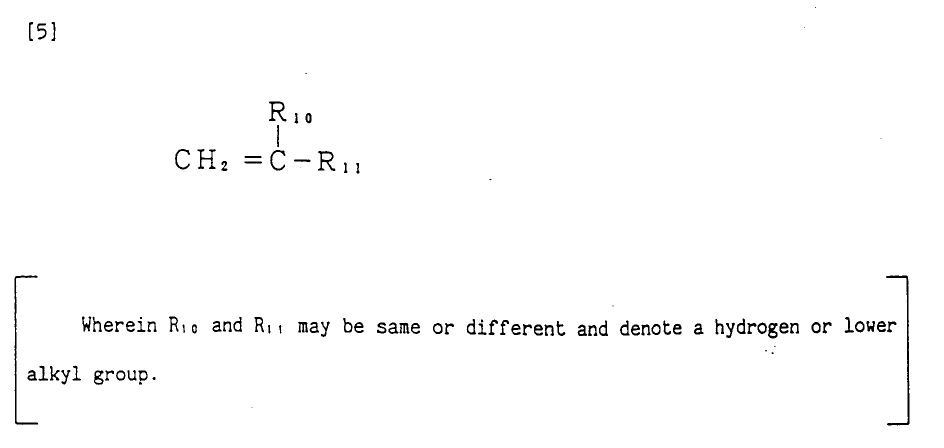

Such monoolefinic monomer includes ethylene, propylene, isoprene, butene-1, pentene-1 and 4-methylpentene-1.

The haloganated olefinic monomer mentioned above includes, for example, vinyl chloride and vinylidene chloride.

Butadiene, isoprene and chloroprene, which are diolefines, may also be included in the monofunctional monomers mentioned above.

Preferable combination of the multifunctional monomers and other monomers may be the combination of divinylbenzene as the multifunctional monomer with styrene, acrylate and methacrylate, all employed independently, or with the mixture of styrene/ acrylate, styrene/methacrylate, acrylate/methacrylate and styrene/acrylate/methacrylate, as the other monomers.

In the monomer (a) mentioned above, the content of the multifunctional monomer having 2 or more polymerizable functionalities is 5% by weight (hereinafter indicated merely as %) or more, preferably 10% or more based on the total weight of the monomer (a). When the content is less than 5%, the cavity of the hollow polymeric monomer obtained does not become spherical, and may provide low porosity. In the present invention, it is also acceptable that the monomer (a) consists only of the multifunctional monomer (100%) having two or more polymerizable functionalities.

The nature of the seed polymeric particle (b) is detailed below.

The seed polymeric particle (b) employed in the present invention is characterized in that it is soluble in the monomer (a) or absorbs the monomer while being swollen. In this context, the expression "or" is used to indicate that the particle (b) has the solubility in the monomer (a) or, otherwise, at least absorbs the monomer (a) while being swollen. The seed polymeric particle (b) is obtained by polymerization of one or more monomers listed for the description of the monomer (a). Although the monomer comprised in the seed polymeric particle is generally the same with that comprised in the monomer (a), it may be different. In the case where the same monomer is employed, a styrenic polymeric particle (b) is used in combination with a styrenic monomer (a), while in the case where the different monomers are employed an acrylic polymeric particle (b) is used in combination with a styrenic monomer (a).

The seed polymeric particle (b) has the particle size distribution of monodispersion system, and generally has the particle size ranging from 0.01 to 50 µm, preferably from 0.5 to 20 µm. Such seed polymeric particle (b) can be obtained by means of usual methods of preparation of polymeric particles, such as dispersion polymerization and emulsion polymerization. Alternatively, the particle can be obtained readily by grinding and grading the polymers. Among those methods, the dispersion polymerization is preferable since a large particle size and the particle size distribution of the monodispersion system can be achieved.

The water-insoluble organic solvent (c) has the nature detailed below. The water-insoluble organic solvent (c) dissolves or swells the polymer made from the monomer (a) and the seed polymeric particle (b). In this context, the expression "or" is used to intend similarly as in the expression "or" used for the seed polymeric particle (b) described above.

The water-insoluble organic solvent (c) includes aromatic solvents such as toluene, xylene and benzene, esters such as ethyl acetate and butyl acetate, aliphatic hydrocarbons such as hexane and heptane. Among these solvents, aromatic solvents such as toluene and xylene are preferable.

The dispersion stabilizer (d) is incorporated for the purpose of improvement in dispersing ability of the seed polymeric particle (b). Such dispersion stabilizer includes polymeric dispersion stabilizers such as polyvinyl alcohol, methyl cellulose, ethyl cellulose, polyacrylic acid, polyacryl-imide, polyethylene oxide, poly(hydroxystearic acid-g-methyl methacrylate-co-methacrylic acid) copolymer, nonionic, anionic and amphoteric surfactants. Among these stabilizers, the polymeric dispersion stabilizers such as polyvinyl alcohol are preferable. By using such polymeric dispersion stabilizers, a satisfactory result of the combination of the organic solvent with the hydrophilic solvent can be obtained.

The oil-soluble initiator (e) serves to initiate the polymerization of the monomer (a) absorbed in the seed polymeric particle (b). Accordingly, the initiator (e) should be oil-soluble. Such oil-soluble initator (e) includes, for example, radical initiators such as azo compounds such as azobisisobutyroni trile, as well as peroxides such as cumene hydroperoxide, t-butylhydroperoxide, dicumylperoxide, di-t-butylperoxide, benzoyl peroxide and lauroyl peroxide which are soluble in the monomer. Alternatively, photoinitiators which serves to initiate the polymerization by means of lights such as UV light may also be employed. Such photoinitiators may be any of the ones which are oil-soluble and employed conventionally.

In the method of the hollow polymeric particle according to the present invention, it is preferable to use a water-soluble polymerization inhibitor. Thus, by reducing the solubility of the monomer (a) in the dispersion system, the monomer (a) is forced to be absorbed into the seed polymeric particle (b) and becomes to be almost absent in the dispersion medium (continuous phase). However, a trace amount of the monomer still remains in the dispersion medium, and, upon polymerization, it forms fine particles of the polymer. As a result, the particle size of he hollow polymeric particle obtained may not be uniform. Accordingly, by employing the water-soluble polymerization inhibitor described above, the polymerization of the monomer (a) in the dispersion medium can be prevented, and the particle size of the hollow polymeric particle becomes more uniform. Since the polymerization inhibitor is water-soluble, it is not absorbed in the seed polymeric particle (b) and thus does not affect the polymerization reaction in the seed polymeric particle (b).

The water-soluble polymerization inhibitor described above may be any of those which are water-soluble and are not soluble in the monomer (a). Such water-soluble polymerization inhibitor includes, for example, inorganic polymerization inhibitors and organic polymerization inhibitors. The inorganic polymerization inihibitors may be inorganic salts such as alkaline and alkaline earth metals salts and ammonium salts of nitrous acid, thiocyanic acid and isothiocyanic acid, alkaline and alkaline metal salts of phosphinic acid, as well as halogenated compounds such as bromide of sodium and potassium and iodide of sodium, potassium, calcium and ammonium, and transition metal ions. The organic polymerization inhibitors may be water-soluble hydroquinones, catecols, amines and nitro compounds.

The hydrophilic organic solvent (f) which serves as the solvent for the dispersion system is described below.

The hydrophilic organic solvent (f) includes lower alcohols such as methanol, ethanol and isopropanol, polyhydric alcohols such as ethylene glycol, propylene glycol, butanediol, diethylene glycol and triethylene glycol, cellosolves such as methyl cellosolve and ethyl cellosolve, ketones such as acetone and methylethyl ketone, ethers such as tetrahydrofurane and esters such as methyl formate. Such hydrophilic organic solvent (f) is selected properly based on the types of the monomer (a) and the seed polymeric particle (b). Thus, the hydrophilic organic solvent should be selected so that the monomer (a) is dissolved in the solvent but neither of the polymer made therefrom nor the seed polymeric particle (b) are not. Among those listed above as the hydrophilic organic solvent (f), the lower alcohols such as ethanol are preferable because of the reason that they dissolve the monomer (a) satisfactorily and can be incorporated with water in any ratio.

Although the hydrophilic organic solvent (f) may be employed independently, it may also be combined with water as mentioned above. In such case, it is preferable to incorporate water in as much amount as possible provided that the solubility of the monomer (a) is not affected.

In the method of the preparation of the hollow polymeric particle according to the present invention, various additives may also be incorporated such as colorants, pigments and release agents.

The process in the method of preparation of the hollow polymeric particle according to the present invention is detailed below.

Firstly, in the hydrophilic organic solvent (f) or the mixture thereof with water, the monomer (a) is dissolved to form the monomer solution. The amount of the monomer (a) dissolved varies depending on the types and the compositions of the solvent and the monomer.

Secondly, to the solution thus obtained, the seed polymeric particle (b), dispersion stabilizer (d) and initiator (e), and optionally, the water-soluble polymerization inhibitor are added. The amount of the seed polymeric particle (b) varies depending on the finally obtained particle size. Thus, since the seed polymeric particle (b) is enlarged to form the hollow polymeric particle, the enlargement of the seed polymeric particle (b) size by n times requires the monomer (a) in the amount increased by n³ times. Accordingly, the weight ratio of the seed polymeric particle (b) to be incorporated is generally 1:1 to 1:10⁴, preferably 1:10 to 1:10⁴ based on the total amount of the monomer (a) and the water-insoluble organic solvent (c) in the dispersion system. The weight ratio of the seed polymeric particle (b) in the dispersion system is 0.01 to 50%, preferably 0.1 to 20%. The weight ratio of the dispersion stabilizer (d) to be incorporated is 0.1 to 30%, preferably 1 to 10% based on the seed polymeric particle (b). The weight ratio of the initiator (e) to be incorporated is 0.001 to 10%, preferably 0.1 to 5% based on the monomer (a). The weight ratio of the polymerization inhibitor to be incorporated is 0.0001 to 0.1%, preferably 0.001 to 0.05% based on the dispersion system to be subjected to the seed polymerization.

Next, in this dispersion system, the solubilities of the monomer (a) and other solutes are reduced. As a means to reduce the solubility, the addition of water to the dispersion system and/or the reduction of the temperature of the entire dispersion system may be mentioned. When a mixture of the hydrophilic organic solvent (f) and water is employed, the hydrophilic organic solvent (f) may be evaporated to increase the relative concentration of water. Preferably, water is added to the dispersion system as the first step, and then the temperature of the dispersion system is reduced as the second step. Thus, by reducing the solubility of the monomer (a), the components, namely, the monomer (a) 1, water-insoluble organic solvent (b) 2 and oil-soluble initiator (e) 3 are forced to be absorbed in the seed polymeric particle (b) 1. As a result, the seed polymeric particle (b)1a is swollen. At this instance, since the water-insoluble organic solvent (c) 2 dissolves the seed polymeric particle (b) 1, the soluble component of the seed polymeric particle (b), monomer (a), water-insoluble organic solvent (c) and oil-soluble initiator (e) are present all in a mixture in the seed polymeric particle (b)1a. In such condition, the ratio of the amount (a) to be absorbed is 50% or more, preferably 90% or more based on the entire amount of the monomer (a). This ratio of the amount to be absorbed can be adjusted suitably by changing the degree of the reduction of the solubility of the monomer (a).

Subsequently, the monomer (a) absorbed in the seed polymeric particle (b) is subjected to the seed polymerization. This polymerization is generally conducted in the atmosphere of an inert gas such as nitrogen at a temperature ranging from -30 to 90°C, preferably from 30 to 80°C. This polymerization reaction is initiated by the initiator (e). The time period of the polymerization varies depending on the type of the monomer (a) absorbed, and is generally 0.1 to 30 hours. This procedure which consists of the swelling and seed polymerization may be conducted once, or may be repeated several times until the particle is grown to a desired size. After this polymerization of the monomer (a), the polymeric layer 5 made from the monomer (a) is formed on the outside of the hollow polymeric particle (shell), and the water-insoluble organic solvent (c) 2 becomes to be located inside of the particle (core). As a result, the hollow polymeric particle obtained is in a form of a capsule having a single spherical cavity. In the seed polymerization reaction, the water-soluble polymerization of the monomer (a) remaining in the dispersion medium. As a result, the formation of the polymeric fine particles which may cause a broad particle size distribution can be avoided. The hollow polymeric particle in a form of a capsule having a single spherical cavity can thus be obtained. The particle size of the hollow polymeric particle is generally 1 to 1000 µm, preferably 1 to 100 µm. The particle size distribution is sharp, representing the monodispersion system.

The hollow polymeric particle thus obtained may also be used as it is as a suspension, or may be used as a powder after filtration and washing with water if desired. In addition, the hollow polymeric particle in a form of a suspension or powder may be subjected to spontaneous evaporation or reduced pressure to remove the water-insoluble organic solvent (c) in the cavity and then applied to various uses. As used herein, the term "hollow" or "cavity" of the hollow polymeric particle is intended to mean not only the cavity containing nothing but also the cavity containing the water-insoluble organic solvent (c), since the hiding power-imparting effect and the gloss-imparting temperature of the dispersion system, and other operations involved are also conducted simply.
Accordingly, the method according to the present invention can be practiced at a low cost without using special facilities or devices. Therefore, by practicing the present method, it is possible to provide the hollow polymeric particle having a high performance easily at a low cost. Moreover, since the hollow polymeric particle obtained according to the present invention has a large porosity and a thin film, it has an ability of diffusing a low molecular substance from the inside of the particle to the outside. Thus, the hollow polymeric particle obtained according to the present invention can be used as a drug delivery system and a microcapsule encapsulating flavor.

The present invention is further detailed in the following examples together with the comparatives.

### [Example 1]

In the first place, a seed polymeric particle was prepared. Thus, a fluid mixture of 20 ml of styrene, 36 ml of deionized water, 144 ml of ethanol, 284 mg of azobisisobutyro-nitrile and 2 g of polyacrylic acid was placed in a three-neck separable flask fitted with a condenser, and the mixture was reacted under nitrogen flow while stirring at 100 rpm at 70 °C for 12 hours to obtain a seed polymeric particle. Observation by an optical microscope revealed that this seed polymeric particle was a monodispersion particle having the particle size (diameter) of about 2 µm. 0.4 g of the seed polymeric particle thus obtained was dispersed in the solution consisting of 70 g of ethanol, 70 g of deionized water, 0.5 g of styrene, 1 g of divinylbenzene, 1.5 g of toluene, 0.15 g of polyvinyl alcohol and 0.15 g of 2,2'-azobis (2,4-dimethylvaleronitrile) to form an emulsion (dispersion). This emulsion was cooled rapidly from the room temperature (about 20°C) to -10°C at the rate of 2°C per minute. Then the emulsion was observed by the optical microscope and it was revealed that the particle was spherical and had been swollen to the particle size of about 7.5 µm. To the emulsion thus cooled to -10°C, 100 g of ion exchanged water at 0°C and 0.024 g of sodium nitrite were added at once, and the mixture was placed in a 300 ml three-neck flask fitted with a condenser, in which the reaction was conducted under nitrogen flow while stirring at 100 rpm at 70°C for 8 hours, whereby effecting the seed polymerization After filtration of the polymeric material obtained in this seed polymerization followed by drying, a hollow polymeric particle was obtained. This hollow polymeric particle is in a form of a capsule having a single spherical cavity. The filtrate was almost transparent, indicating that no polymeric fine particles were produced during the process. The hollow polymeric particle thus obtained was examined for the particle size distribution using Coulter counter. On the other hand, the specific gravity of the hollow polymeric particle which had been dried was determined to calculate the porosity of the hollow polymeric particle. As a result, the hollow polymeric particle had 50% of porosity, mean particle size of 7.6 µm, and sharp particle size distribution (the particle size distribution of monodispersion system) as evident from Table 1 shown below. Thus, in Example 1, since the components were incorporated in proper ratios and the seed polymeric particle (b) was produced by the dispersion polymerization, the hollow polymeric particle obtained had a high performance.

**[Table 1]**

| | | |
|---|---|---|
| Particle distribution | 6.3 µm or less | 2% |
| | 6.3 - 8.0 µm | 93% |
| | 8.0 µm or more | 5% |
| Mean particle size (µm) | | 7.6 |
| Porosity (%) | | 50 |

### [Example 2]

A fluid mixture of 20 ml of styrene, 36 ml of deionized water, 144 ml of ethanol, 284 mg of azobisisobutyro-nitrile and 2 g of polyacrylic acid was placed in a three-neck separable flask fitted with a condenser, and the mixture was reacted under nitrogen flow while stirring at 100 rpm at 70°C for 12 hours to obtain a seed polymeric particle. Observation by an optical microscope revealed that this particle was a monodispersion particle having the particle size of about 2 µm. 0.4 g of the seed polymeric particle thus obtained was dispersed in the solution consisting of 70 g of ethanol, 70 g of deionized water, 1 g of divinylbenzene, 0.5 g of styrene, 1.5 g of toluene, 0.15 g of polyvinyl alcohol and 0.15 g of 2,2'-azobis (4-methoxy-2,4-dimethylvaleronitril e) to form an emulsion. 20 g of deionized water was dropped at the rate of 0.5 g per minute into this emulsion, which was being stirred vigorously, and further 80 g of deionized water was added therein. Then the emulsion was observed by the optical microscope and it was revealed that the particle was spherical and had been swollen to the particle size of about 7 µm. Then the emulsion was placed in a three-neck flask fitted with a condenser (300 ml), in which 0.024 g of sodium sulfite was added and the reaction was conducted under nitrogen flow while stirring at 100 rpm at 70°C for 18 hours, whereby effecting the seed polymerization. After filtration of the hollow polymeric particle followed by drying, a hollow polymeric particle was obtained. This hollow polymeric particle is in a form of a capsule having a single spherical cavity. The filtrate was almost transparent, indicating that no polymeric fine particles were produced during the process. The hollow polymeric particle thus obtained was examined for the particle size distribution using Coulter counter. On the other hand, similarly as in Example 1, the porosity of the hollow polymeric particle was determined. As a result, the hollow polymeric particle had 50% of porosity, mean particle size of 7.3 µm, and sharp particle size distribution (the particle size distribution of monodispersion system) as evident from Table 2 shown below. Thus, in Example 2, since the components were incorporated in proper ratios and the seed polymeric particle (b) was produced by the dispersion polymerization, the hollow polymeric particle obtained had a high performance.

**[Table 2]**

| | | |
|---|---|---|
| Particle distribution | 6.3 µm or less | 2% |
| | 6.3 - 8.0 µm | 91% |
| | 8.0 µm or more | 7% |
| Mean particle size (µm) | | 7.3 |
| Porosity (%) | | 50 |

### [Example 3]

14 ml of styrene, 6 ml of butyl acrylate, 36 ml of deionized water, 144 ml of ethanol, 280 mg of azobisisobutyro-nitrile and 2 g of polyacrylic acid were placed in a three-neck separable flask (300 ml) fitted with a condenser, and the mixture was reacted under nitrogen flow while stirring at 100 rpm at 70 °C for 12 hours to obtain a seed polymeric particle. Observation by an optical microscope revealed that this particle was a monodispersion particle having the particle size of about 2 µm. 0.4 g of the seed polymeric particle thus obtained was dispersed in the solution consisting of 70 g of methanol, 70 g of deionized water, 7.5 g of divinylbenzene, 2.5 g of styrene, 7.5 g of toluene, 2. 5 g of xylene, 0.3 g of vinyl alcohol and 0.15 g of benzoyl peroxide to form an emulsion. This emulsion was subjected to reduced pressure to 400 mmHg at 30°C to evaporate 30% of the medium. By this procedure, a slight amount of styrene was also evaporated but along with the reduction in the concentration the particle became spherical and swollen to the particle size of about 14 µm. Then the emulsion was placed in a three-neck flask fitted with a condenser (200 ml), in which 0.012 g of sodium sulfite was added and the reaction was conducted under nitrogen flow while stirring at 100 rpm at 70°C for 8 hours. After filtration of the polymeric material followed by drying, a hollow polymeric particle was obtained. This hollow polymeric particle is in a form of a capsule having a single spherical cavity. The filtrate was almost transparent, indicating that no polymeric fine particles were produced during the process. The hollow polymeric particle thus obtained was examined for the particle size distribution using Coulter counter. On the other hand, similarly as in Example 1, the porosity of the hollow polymeric particle was determined. As a result, the hollow polymeric particle had 50% of porosity, mean particle size of 13.0 µm, and sharp particle size distribution (the particle size distribution of monodispersion system) as evident from Table 3 shown below. Thus, in Example 3, since the components were incorporated in proper ratios and the seed polymeric particle (b) was produced by the dispersion polymerization, the hollow polymeric particle obtained had a high performance.

**[Table 3]**

| | | |
|---|---|---|
| Particle distribution | 6.3 µm or less | 3% |
| | 6.3 - 8.0 µm | 93% |
| | 8.0 µm or more | 4% |
| Mean particle size (µm) | | 13.0 |
| Porosity (%) | | 50 |

### [Example 4]

A solution consisting of 20 ml of methyl methacrylate, 36 ml of deionized water, 144 ml of isopropyl alcohol, 200 mg of 2,2'-azobisbutyronitrile and 2 g of polyacrylic acid was placed in a three-neck separable flask (300 ml) fitted with a condenser, and the mixture was reacted under nitrogen flow while stirring at 100 rpm at 70°C for 12 hours to obtain a seed polymeric particle. Observation by an optical microscope revealed that this seed polymeric particle was a monodispersion particle having the particle size of about 1 µm. 0.1 g of the seed polymeric particle thus obtained was dispersed in the solution consisting of 50 ml of isopropyl alcohol, 70 g of deionized water, 1 g of methyl methacrylate, 4 g of divinylbenzene, 5 g of toluene, 0.15 g of polyvinyl pyrrolidone and 0.15 g of benzoyl peroxide to form an emulsion. 30 g of deionized water was dropped at the rate of 0.5 g per minute into this emulsion, which was being stirred vigorously, and further 70 g of deionized water was added therein, whereby effecting swelling. Then the emulsion was observed by the optical microscope and it was revealed that the particle had been swollen to the particle size of about 10 µm. 0. 048g of hydroquinone was added to the emulsion, and the mixture was placed in a three-neck flask fitted with a condenser (300 ml) and reacted under nitrogen flow while stirring at 100 rpm at 70 °C for 8 hours, whereby effecting the seed polymerization to obtain the hollow polymeric particle. After filtration of the hollow polymeric particle followed by drying, a hollow polymeric particle was obtained. This hollow polymeric particle is in a form of a capsule having a single spherical cavity. The filtrate was almost transparent, indicating that no polymeric fine particles were produced during the process. The hollow polymeric particle thus obtained was examined for the particle size distribution using Coulter counter. On the other hand, similarly as in Example 1, the porosity of the hollow polymeric particle was determined. As a result, the hollow polymeric particle had 50% of porosity, mean particle size of 9.8 µm, and sharp particle size distribution (the particle size distribution of monodispersion system) as evident from Table 4 shown below. Thus, in Example 4, since the components were incorporated in proper ratios and the seed polymeric particle (b) was produced by the dispersion polymerization, the hollow polymeric particle obtained had a high performance.

**[Table 4]**

| | | |
|---|---|---|
| Particle distribution | 6.3 µm or less | 2% |
| | 6.3 - 8.0 µm | 94% |
| | 8.0 µm or more | 4% |
| Mean particle size (µm) | | 9.8 |
| Porosity (%) | | 50 |

### [Example 5a and 5b]

A solution consisting of 20 ml of styrene, 36 ml of deionized water, 144 ml of ethanol, 284 mg of 2,2^{'}-azobisiso-butyronitrile and 2 g of polyacrylic acid was placed in a three-neck separable flask fitted with a condenser, and the mixture was reacted under nitrogen flow while stirring at 100 rpm at 70°C for 12 hours to obtain a seed polymeric particle. Observation by an optical microscope revealed that this seed polymeric particle was a monodispersion particle having the particle size of about 2 µm. To the solution consisting of 50 g of ethanol, 30 g of deionized water, 0.5 g of xylene, 1.0 g of toluene, 0.15 g of lauryl trimethyl ammonium chloride and 0.15 g of 2,2'-azobis (4-methoxy-2,4-dimethylvaleronitrile), 1.425g of styrene and 0.075 g of divinylbenzene were added in Example 5a and 1.35 g of styrene and 0.15 g of divinylbenzene were added in Example 5b. Then 0.4 g of the seed polymeric particle was dispersed in the mixture to form an emulsion. This emulsion was treated similarly as in Example 4 to effect swelling. Then the emulsion thus obtained was observed by the optical microscope and it was revealed that the particle was spherical and had been swollen to the particle size of about 8 µm. 0.018g of hydroquinone was added to the emulsion, and the mixture was placed in a three-neck flask fitted with a condenser (300 ml) and reacted under nitrogen flow while stirring at 100 rpm at 70°C for 18 hours, whereby effecting the seed polymerization to obtain the hollow polymeric particle. After filtration of the hollow polymeric particle followed by drying, a hollow polymeric particle was obtained. When observed by the optical microscope, this hollow polymeric particle is in a form of a capsule having a single spherical cavity with a uniform particle size.

### [Example 6c and 6d]

Except for using 0.25 g of divinylbenzen and 0.15 g of styrene in Example 6c and 0.4 g of toluene in Example 6d, the procedure similar to that in Example 1 was employed to form the hollow polymeric particles. When the hollow polymeric particles in Example 6c and 6d were observed by an optical microscope, both particles were in a form of a capsule having a single cavity, with a uniform particle size.

### [Example 7e and 7f]

15 ml of styrene, 28 ml of deionized water, 100 ml of ethanol, 0.235 g of azobisisobutyronitrile and 1.68 g of polyacrylic acid were placed in a three-neck flask (300 ml) fitted with a condenser, and the mixture was reacted under nitrogen flow while stirring at 60 rpm at 70°C for 24 hours to effect the dispersion polymerization to obtain the seed polymeric particle. Each 0.03 g of the seed polymeric particle was dispersed in the solution consisting of 7 g of methanol, 3 g of deionized water, 0.3 g of divinylbenzen, 0.006 g of benzoyl peroxide and 0.15 g in Example 7e and 0.3 g in Example 7f of toluene to form emulsions. 40 g of deionized water was dropped at the rate of 2.88 ml per hour into each emulsion, which was being stirred vigorously. Subsequently, each emulsion was placed in a three-neck separable flask (300ml) fitted with a condenser and reacted under nitrogen flow while stirring at 100 rpm at 70 °C for 24 hours to effect the seed polymerization to form the hollow polymeric particle. Each polymeric particle was observed by an optical microscope and revealed to have a single spherical cavity with the particle size distribution of a monodispersion system.

### [Comparative 1]

A polymeric particle was prepared similarly as in Example 7 except for using no toluene. This polymeric particle was observed by an optical microscope and revealed to be a fine particle having no single cavity.

### [Comparative 2]

A solution consisting of 20 g of styrene, 180 g of deionized water, 0.15 g of ammonium persulfate, 2 g of a commercial emulsifier Emulgen 935 (Trade name, Kao) and 1 g of Emal 0 (Trade name, Kao) was placed in a three-neck separable flask (300 ml) fitted with a condenser and reacted under nitrogen flow while stirring at 100 rpm at 70°C for 8 hours to effect the emulsion polymerization to obtain a seed polymeric particle. This seed polymeric particle was observed by a laser spectroscope and revealed to have the particle size as small as about 0.04 µm. To the emulsion in which this seed polymeric particle was dispersed, 10 g of toluene, 5 g of styrene and 5 g of divinylbenzene were added and the mixture was stirred vigorously at a room temperature for 1 hour. Subsequently, the polymeric particle in this emulsion was observed by the laser spectroscope and revealed to have the particle size of about 0.07 µm. To this emulsion, 0.15 g of ammonium persulfate was added and reacted at 70°C for 10 hours to effect the seed polymerization, whereby obtaining the polymeric particle. The polymeric particle in the emulsion thus obtained was subjected to the determination of the particle size by the laser spectroscope and the observation by an electron microscope, and revealed to have the mean particle size of 0.06 µm with a broad particle size distribution and the porosity as small as about 26%.

**[Table 5]**

| | | |
|---|---|---|
| Particle distribution | 6.3 µm or less | 32% |
| | 6.3 - 8.0 µm | 53% |
| | 8.0 µm or more | 15% |
| Mean particle size (µm) | | 0.06 |
| Porosity (%) | | 26 |

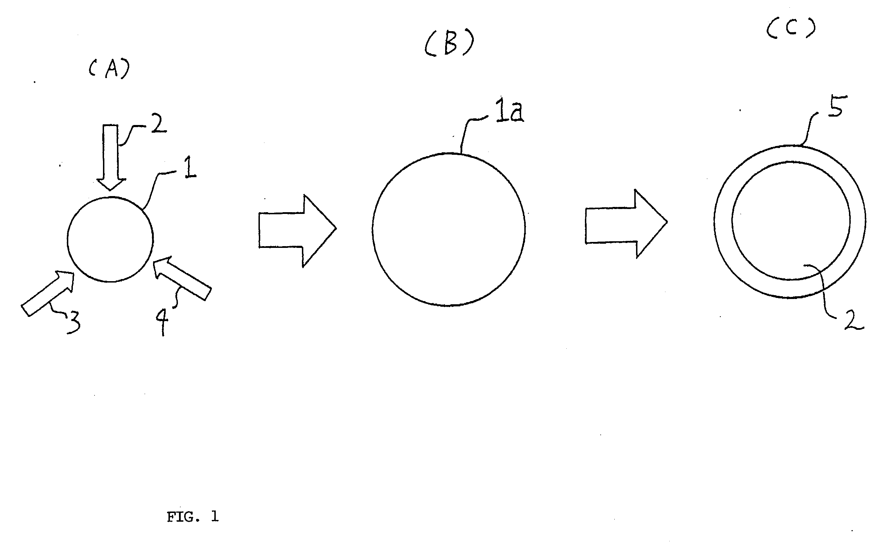

## Claims

1. A method of preparing a hollow polymeric particle from the components:
(a) a water-insoluble monomer containing a monomer having two or more polymerizable functionalities;
(b) a seed polymeric particle which is dissolved in or absorb said water-insoluble monomers (a) to be swollen;
(c) a water-insoluble organic solvent in which a polymer formed from said water-insoluble monomer (a) and said seed polymer particles (b) are dissolved or swollen;
(d) a dispersion stabilizer;
(e) an oil-soluble initiator;and,
(f) a hydrophilic organic solvent in which said water-insoluble monomer (a) is soluble but a polymer formed from said monomer or said seed polymeric particle is not, comprising: a step wherein said components (a) to (e) are dispersed in said hydrophilic organic solvent to form a dispersion system; a step wherein the solubilities of said water-insoluble monomer (a), water-insoluble organic solvent (c) and oil-soluble initiator (e) among the components (a) to (e) forming said dispersion system are reduced whereby allowing said seed polymeric particle (b) to absorb said water-insoluble monomer (a), water-insoluble organic solvent (c) and oil-soluble initiator (e); and, a step wherein said water-insoluble monomer (a) is polymerized selectively in said seed polymeric particle (b).

2. A method according to Claim 1 wherein the means to reduce the solubilities of said water-insoluble monomer (a), water-insoluble organic solvent (c) and oil-soluble initiator (e) in said dispersion system is the addition of water in said hydrophilic organic solvent (f).

3. A method according to Claim 1 wherein the means to reduce the solubilities of said water-insoluble monomer (a), water-insoluble organic solvent (c) and oil-soluble initiator (e) in said dispersion system is the reduction of the temperature of said dispersion system.

4. A method according to any of Claims 1 to 3 wherein said water-insoluble monomer (a) contains said monomer having 2 or more polymerizable functionalities in an amount of 5 % by weight or more based on the total amount of the monomer.

5. A method according to any of Claims 1 to 4 wherein said hydrophilic organic solvent (f) is a hydrophilic organic solvent (f) containing water.

6. A method according to any of Claims 1 to 5 wherein the ratio of said water-insoluble monomer (a) to be incorporated is 100% by weight or more and the ratio of said water-insoluble organic solvent (c) to be incorporated is 100% by weight or more both based on said seed polymeric particle.

7. A method according to any of Claims 1 to 6 wherein said dispersion system is a dispersion system containing a water-soluble polymerization inhibitor.
